Europäisches Patentamt

European Patent Office

Office européen des brevets

(11) Publication number: **0 145 958**
**B1**

(12) **EUROPEAN PATENT SPECIFICATION**

(45) Date of publication of patent specification: **17.01.90**

(21) Application number: **84113728.4**

(22) Date of filing: **14.11.84**

(51) Int. Cl.⁵: **G 05 B 19/19, H 02 K 41/03**

(54) Positioning apparatus.

(30) Priority: **20.12.83 US 563334**
**22.12.83 US 564630**

(43) Date of publication of application:
**26.06.85 Bulletin 85/26**

(45) Publication of the grant of the patent:
**17.01.90 Bulletin 90/03**

(84) Designated Contracting States:
**DE FR GB**

(56) References cited:
**EP-A-0 093 912**
**DD-A- 146 525**
**US-A-3 457 482**

**ELEKTRONIK PRAXIS, vol. 9, nos. 7/8, August 1974, pages 7-11; R.J. NEMHAUSER "Die Nutzung der Positionsempfindlichkeit von Si-Photodetektoren für Steuerungsaufgaben"**

(73) Proprietor: **International Business Machines Corporation**
**Old Orchard Road**
**Armonk, N.Y. 10504 (US)**

(72) Inventor: **Hollis, Ralph LeRoy, Jr.**
**2601 Evergreen Street**
**Yorktown Heights New York 10598 (US)**
Inventor: **Musits, Bela Louis**
**RD7, Box 226A East Hook Cross Road**
**Hopewell Junction New York 12533 (US)**

(74) Representative: **Blakemore, Frederick Norman et al**
**IBM United Kingdom Limited Intellectual Property Department Hursley Park**
**Winchester Hampshire SO21 2JN (GB)**

Courier Press, Leamington Spa, England.

## Description

### Background of the invention

### Field of the invention

This invention relates to positioning apparatus, for example, for a robot end effector, and in its preferred form is an electromagnetically powered X—Y or X—Y—θ (θ denoting an angular rotation effectively in the X—Y plane) positioning device which operates without static friction, with power, with precise control of position, and with positional feedback.

### Description of related art

The need for precision positioning is well known in a number of mechanical and electronic arts. Close tolerance machining, for example, requires that the tool be positioned exactly. Various mechanisms for accomplishing such positioning, and various techniques for getting the most out of such mechanisms, are known.

A known mechanism for accomplishing precision positioning within a plane is the use of a linear motor to drive and hold a device in a particular position. Such linear motors, as well as electromechanical stepping motors, hydraulic actuators, and other mechanisms are known for use in precision positioning.

A typical solution to the need for high precision motion, in a plane of scanning for a robot end effector, is to provide a pair of linear actuators mechanically connected in tamdem so that the Y-actuator is physically carried at the end of the X-actuator. A disadvantage of this approach is that the Y and X stages are mechanically in series; the Y stage moves the payload, but the X stage must move both the Y stage and the payload. Symmetry is broken, and in critical applications the control strategies for the X stage and the Y stage must be different for the different dynamics involved.

### Related prior art patents

United States Patent Number 3,457,482, Sawyer, Magnetic Positioning Device, July 22, 1969, shows a head incorporating two parallel sets of magnets along each of two perpendicular axes, with driving circuitry for selectively energizing the magnet coils.

United States Patent Number 3,735,231, Sawyer, Linear Magnetic Drive System, May 22, 1973, shows an orthogonal linear motor mechanism, for moving a head about a platen, with a servo loop for precision control of position.

United States Patent Number 3,867,676, Chai et al, Variable Reluctance Linear Stepper Motor, February 18, 1975, shows a variable reluctance linear stepping motor with a special set of windings in series aiding relationship.

United States Patent Number 4,286,197, Eberhard et al, Two-coordinate Positioning Device, August 25, 1981, shows a two-coordinate tool positioning device having orthogonal linear motors.

United States Patent Number Re. 27,289, Sawyer, Magnetic Positioning Device, February 15, 1972, shows a precision positioner having two U-shaped soft iron pole pieces, each wound with copper wire, biased with fields produced by a permanent magnet. In the absence of coil current, magnetic flux links the two pole pieces, symmetrically dividing between the left and right legs of each pole piece, forming a closed path through the air gaps and soft iron armature. Induced fields in the pole pieces add or subtract from the bias fields and provide positioning impetus to an armature. The Sawyer motor shows a two-dimensional linear positioner based on permanent magnet flux steering, using a pair of magnets arrayed asymmetrically to achieve within a single step limited two-dimensional linear motion over a restricted displacement.

EP—A—93912 describes a linear motor including movable (a head) and stationary (a stator) members disposed in continuous relationship. First magnetizable and non-magnetizable zones are alternately disposed on the stator in a particular direction. Second magnetizable and non-magnetizable zones are alternately disposed on the head in the particular direction. The zones on the head and the stator face each other and have substantially equal spacings. First means are associated with the head for producing magnetic fluxes in the magnetizable zones in the head and stator in a particular pattern to obtain incremental relative movements between the head and the stator on a vectorial basis in the particular direction. Second means are associated with the head for compensating for hysteresis effects in the magnetizable zones in the head and stator. The second means may produce magnetic flux of alternating polarity and decaying amplitude near the end of each incremental movement of the head relative to the stator. Means are provided for indicating the position of the head relative to the stator in the particular direction at each instant. Means are included for obtaining the production by the first means of magnetic fluxes at each position to provide corrections in the incremental movement of the head relative to the stator in the particular direction at that position.

### Disadvantages of the prior art

In the prior art, fine positioners tend to require sliding motion planar mechanisms, or wheeled carriages, to allow the multidimensional motions required to position the end effector as desired. Such fine positioners tend to be heavy because of the multiple coils and associated magnet armatures. This heaviness causes the fine positioners to be slow in response, subject to wear problems, and in need of frequent lubrication, adjustment and repairs.

In the prior art fine positioners of the linear motor type, the position of the armature may be estimated as a function of the current, but the actual position of the armature cannot accurately be determined under conditions of varying load and varying dynamics.

The need persists for a strong, durable precision positioning device which does not suffer the problems associated with static friction inherent in sliding and wheeled carriages, and which provides actual position feedback necessary for closed loop servo positioning.

Neither does the prior art disclose motors that only need one magnet to provide both X- and Y-forces.

Summary of the invention

The invention is defined by claim 1.

A first preferred precision X—Y positioner described hereinafter provides two-dimensional precision motion using a two-dimensional electromagnetic actuator, with X stage and Y stage acting in parallel, maintaining symmetry and offering the advantage of identical strategy for the X stage and the Y stage. The two-dimensional actuator is a linear stepping motor based on permanent magnet flux steering, using two U-shaped permanent magnets, each with two soft iron coil-wrapped U-shaped pole pieces, and a soft iron armature. The armature is mounted for free movement in X and Y directions in its own plane, with respect to a stator in a reference plane parallel to the plane of the armature. The armature is suspended for friction-free X—Y movement, and may carry a gripper, chuck, cutting tools, or other end effector. The armature, suspended by a basket or box of flexure springs and spring carriers, is free to move within its own lane to the desired X—Y coordinates. The pole pieces on each magnet are mounted orthogonally to each other and at 45 degrees to the axis of the magnet. Control currents applied to the coils on the pole pieces provide motive power to reposition the armature. One magnet suffices to provide both X and Y forces, but the use of two magnets avoids the imbalance of forces which might cause rotational motion. Electromotive force differentials applied to the armature, by means of a servo loop, oppose any forces tending to move the armature from the desired X—Y coordinates.

In a second X—Y—θ positioner described hereinafter, the armature is mounted on flexure columns which additionally allow limited rotation of the armature.

The invention may be used to provide precision positioning, for example for the end effector of a robot, without encountering the problem of static friction which is inherent in sliding planar mechanisms and wheeled carriages.

It provides a robust precision positioner which is easy to manufacture and to service.

It may provide a variable compliance function to a precision positioner, the variability of the compliance (resistance to motion) being subject to operator control via the control computer and applied electrical signals.

The use of orthogonally positioned pole pieces on a magnet so as to provide a two-dimensional positioner motor can be combined with a friction-free suspension for the motor armature so as to eliminate static friction entirely.

Non-contact two-dimensional position sensors which do not add undue mass to critical moving parts can be used.

Its compliance capability may be varied, that is, its variable resistance to repositioning forces, without the requirement of physical change of springs or mechanical adjustment.

An advantage of the invention is that it permits positioning of a tool with precision in the sub-micron range.

Another advantage of the invention is that its capability may be remotely set for compliance, and remotely set for either open loop or for closed loop positioning, under computer control, thus accommodating complex and position-related compliance and damping algorithms without mechanical adjustment.

The foregoing and other objects, features and advantages of the invention and its embodiments will be apparent from the more particular description of the preferred embodiments of the invention, as illustrated in the accompanying drawings.

Brief description of the drawings

Fig. 1 is a side elevation diagram of an electromagnetic precision X—Y positioner according to the invention.

Figs. 2 and 3 show the orthogonal positioning of the magnet pole pieces and coils on the 45 degree angled U-shaped magnet. These provide motive power to the positioning motor of the precision X—Y positioner of Fig. 1.

Fig. 4 is a semidiagrammatic presentation of the electronics and power electric circuits of the precision positioner of Fig. 1.

Fig. 5 is a detailed side elevation section view of the precision positioner shown in Fig. 1.

Fig. 6 is a graph showing nominal compliance and a set of programmable variations.

Fig. 7 is a plan view of an alternative embodiment of the precision positioner, in which the friction-free armature support has been rearranged so as to eliminate any Z-motion.

Fig. 8 is a side elevation diagram of a precision X—Y—θ (Theta) positioner, slightly simplified for ease of representation.

Figs. 9, 10, 11 and 12 are motion diagrams respectively for X-translations, Y-translation, Theta-rotation, and for a representative X—Y—Theta composite translation-rotation.

Fig. 13 is a diagrammatic presentation of the electronics and power electric circuits of the precision X—Y—Theta positioner.

Fig. 14 is a simplified top view of the precision X—Y—Theta positioner.

Fig. 15 is a detailed partially cutaway side view of the precision X—Y—Theta positioner.

Description of the preferred embodiments

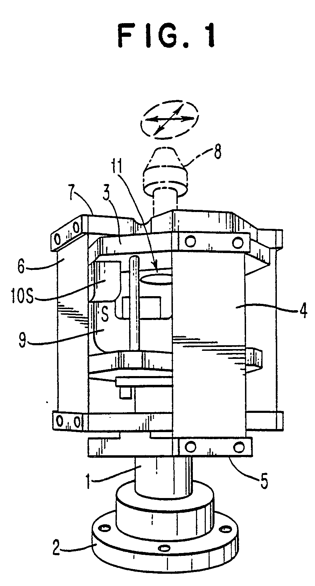

Fig. 1 shows the precision positioner abbreviated in detail for ease of description. Support post 1 is solidly mounted in bracket 2, which may be in turn mounted on a movable gross positioning device such as a robot arm or machine tool, or may be solidly mounted to a table. Solidly mounted at the top of support post 1 is a stator 3, which defines a reference plane from which motions may be defined. Stator 3 has mounted to it two parallel flexure springs 4, which extend downward from the stator to a spring carrier 5, which has a central relief aperture to allow limited free movement of spring carrier 5 about support post 1. A second set of flexure springs 6, in parallel planes normal to the planes of flexure springs 4, extend upward from the spring carrier 5 to armature 7. This fixes the armature against Z-motion (motion normal to the reference plane), and also against any rotation, but allows free X and Y motion in its own plane, parallel to the reference plane. A tool holding chuck 8 or other fixtures may be mounted on the armature 7. Permanent magnet 9 is mounted securely to stator 3; the permanent magnet 9 has two orthogonal U-shaped pole pieces (10S shown; 10N obscured) respectively mounted at its S and N poles. The pole pieces are fitted with coils of insulated copper wire protected by epoxy resin. The permanent magnet, pole pieces and coils function as the stator of the X—Y positioning motor. A lateral effect cell 11 operates to provide continuous X—Y position indications for the armature 7 with respect to stator 3.

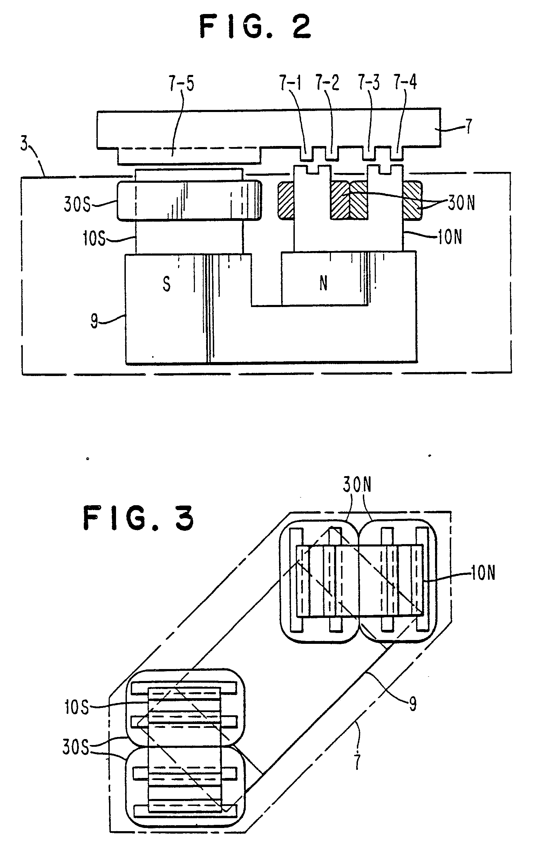

Figs. 2 and 3 illustrate the X—Y motor. Stator 3, made up of permanent magnets 9 with their pole pieces 10S and 10N and associated windings 30S and 30N, provides flux differentials at teeth (7-1, 7-2, 7-3, 7-4 and 7-5 shown) of armature 7, providing motive power in both the X and Y dimensions at the same time. Pole pieces 10S and 10N are set orthogonal to each other, and at 45 degree angles to the axis of their permanent magnet 9. Armature 7 is positioned appropriately for the positioning of pole pieces 10S and 10N so that vector X—Y motions may be impressed on armature 7 with respect to the fixed platform base and magnet 9. In practice, two magnets are used so as to provide balanced magnetomotive forces.

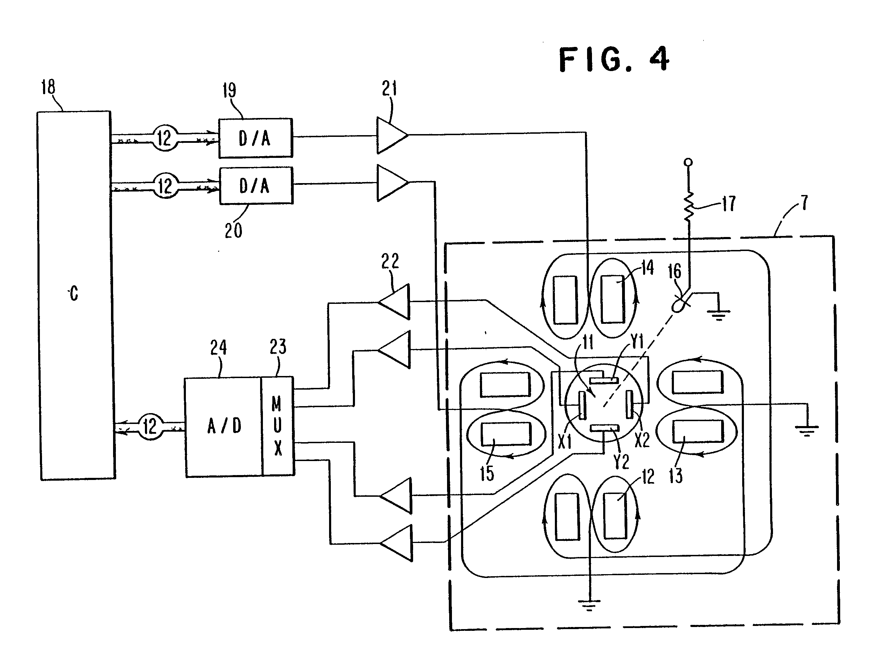

Fig. 4 shows the relationship between the armature, the magnet pole pieces and associated coils, the computer and the position sensor. Lateral effect cell 11 serves as the position sensor for the armature, providing unbalanced current signals related to the instantaneous position of a light emitting diode (LED) 16 located on the armature, defining a beacon point in the reference plane. The computer accepts these position signals from the position sensor, calculates motions required to move from instantaneous position to desired position, and sends motion control signals back to motor coils 30S and 30N as required to cause movement of the armature to the desired position. Lamp 16, provided with current via circuitry 17, provides positioning information with respect to the relative positions of the beacon point of the armature and of the beacon point of the stator 3. The position sensor sender (LED 16) and lateral effect cell 11 in theory could be interchangeably positioned on armature 7 and stator 3; in practice the LED, being of smaller mass and requiring fewer wire connections, is placed on the armature. Lateral effect cell 11 has four electrodes arranged in a square. When the spot of light from LED 16 is centered among the electrodes, the lateral effect cell provides balanced position currents. As the light from LED 16 (which preferably is infra-red) moves between the electrodes, the electrodes provide unbalanced location current signals to the computer 18. This new instantaneous position signal is carried via circuitry including amplifier 22, multiplexer 23 and analog-to-digital converter 24. Computer 18 calculates the required control effort from the desired new location, and provides the required motion control signals via digital-to-analog converters 19, 20 and interconnecting circuitry including amplifier 21. Motion of the armature is accordingly provided, and a new instantaneous position signalled by position sensor 11.

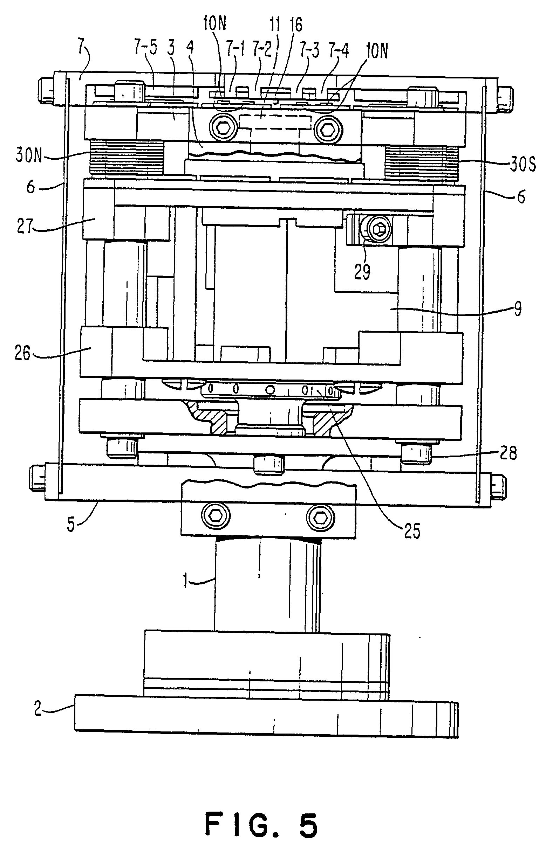

Fig. 5 illustrates details of the first preferred embodiment. Support post 1 and bracket 2 support basket support means including stator 3, flexure springs 4, spring carrier 5, flexure springs 6 and armature 7. Teeth 7-1, 7-2, 7-3 and 7-4 are juxtaposed (with clearance of tens of microns) above pole pieces 10N of stator 3. Beacon LED 16 on armature 7 provides a position signal via lateral effect cell 11.

Coils 30N and 30S provide positioning power as a function of position control signals from computer 18 (Fig. 4).

Adjustment mechanism 25 provides vertical adjustment to the magnet assembly to provide correct clearance between armature 7 and stator 3, by repositioning magnet platforms 26 and 27 which slide on magnet assembly support rods 28 as driven by adjustment mechanism 25. Magnet assembly locking clamp screw 29 retains the adjustment.

Control of precision positioner

Closed-loop control of the precision positioner can be achieved using analog or digital circuits, by a computer, or combination of these methods. In the preferred embodiment, the control law is specified in a programmed algorithm executing in a microcomputer. This makes the control law easily adaptable to the application, and dynamically alterable during operation of the fine positioner. Various control laws may be used, as are well known in the art. For example, a PID (Proportional Integral Derivative) law of the form:

$$U = Ke + K_i \int e\, dt + K_d \frac{de}{dt}$$

or its discrete time equivalent can be used. Here, U is the control effort applied to the motor, e is the position error (desired position−actual position), and K, $K_i$ and $K_d$ are gain coefficients which respectively multiply the error, the time integral of the error, and the time derivative of the error. These gains are chosen to maximize performance in a given application, subject to stability criteria.

The above control law is illustrative. Other control laws, known in the art, which are based on sampling theory can be used to advantage.

## Description of how the motor works

The motor differs from the known linear positioners, such as that of Sawyer, in that a single magnet, with one pole piece normal to the other, provides both X-motion and Y-motion. (Theta motion is undesirable in this embodiment).

Referring to Fig. 3, a permanent magnet 9 (which can be Alnico or rare-earth or other magnetic material provides a bias field. Magnetic flux passes through magnetically soft pole pieces 10S and 10N, dividing equally through the two legs of each pole piece. Several teeth provided in the pole pieces and armature serve to increase the available force. In the absence of current in the coils 30N and 30S, the armature assumes a neutral position, supported by the spring flexures. Coils 30N are wound with opposite sense on the two legs of the pole piece 10N; similarly for 30S and 10S. Current flowing through the coils 30N induces a magnetic flux which adds to and subtracts from the permanent magnet flux in the two legs of pole piece 10N, causing the armature to be attracted to the right or left, depending on the sign of the current. The armature is free to move under the restoring force provided by the spring flexures; thus a motion is generated whose value is proportional to the algebraic value of current flowing in the coils. The same relationship holds for pole piece 10S and coils 30S, except the armature motion would be in and out of the plane of the paper in view shown. The teeth on the north and south pole pieces are arranged orthogonal to each other, so motions due to coils 30S and 30N are independent.

## Lateral effect cell

Lateral effect cells (position sensing photodiodes) are well-known in the art, and are commercially available. The lateral effect cell is a planar photodiode which reacts to a beacon light to provide electrical signals as a function of the location of the spot of light from the beacon. In the preferred embodiment, the beacon light is a lamp 16 mounted on the armature. The lateral effect cell 11 is square, and the position of the small spot of light on the surface of the lateral effect cell is determined by measuring the generated photocurrents in four electrodes arranged on the periphery of the square active surface of the lateral effect cell. The two primary measuring directions may be denoted X and Y. Then electrodes X1 and X2, whose principal axes are perpendicular to the X measuring direction, are used to measure the X position of the light spot; similarly for Y. The X position is given by dividing the difference in the X1 and X2 currents by their sum. The Y position is given by dividing the difference in the Y1 and Y2 currents by their sum. These calculations are performed by analog circuits, digital circuits, by software, or by a combination of these methods, as is well known in the art.

Four modes of operation of the precision positioner:

—as a precision positioning or scanning device

The precision positioning device may be used to execute fine X—Y motions, which motions are sub-micron in precision, from a total range on the order of 2 mm. Motion patterns such as raster scanning can be carried out with precision. Motion is rapid and controlled by the feedback loop involving the built-in lateral effect cell sensor, or can be provided by a separate, external sensor which senses the work environment directly. The ability to execute fine motions has many applications in science and engineering.

—as a variable compliance device

The device, when operating in a "regulator mode," attempts to maintain its commanded position. Any external forces tending to displace the device will be met by restoring forces generated by the servo controller. By varying the closed loop gain parameter (in the preferred embodiment this is done simply by changing coefficients in the computer control program) the compliance or stiffness of the device is varied. The natural compliance of the device in open-loop mode is determined by the spring constants of the flexure springs. In closed-loop mode, the compliance is programmed, and may range from much greater than to much less than the natural compliance, as well as equal to the natural compliance simulating open-loop mode. This property is extremely useful for tasks involving the fitting together of two or more mating parts, as in a robot assembly operation.

Relatively simple programming changes to computer 18 can be made to provide not only desired motions to armature 7, but also to control the compliance (resistance to repositioning of the armature 7). The flexure springs provide a basic compliance, which may be considered as zero resistance to repositioning.

Programming in a ratio change to the digital values provided to the analog-to-digital converter, compliance may be altered from zero resistance to repositioning to maximum resistance to repositioning. The resistance to repositioning may also be programmed to vary as a function of position (for example, higher near the limit of travel) or as a complex variable or logarithmic function.

Varying the compliance of the armature relative to the stator results in variations in the values of position control currents as a function of a compliance function variation formula.

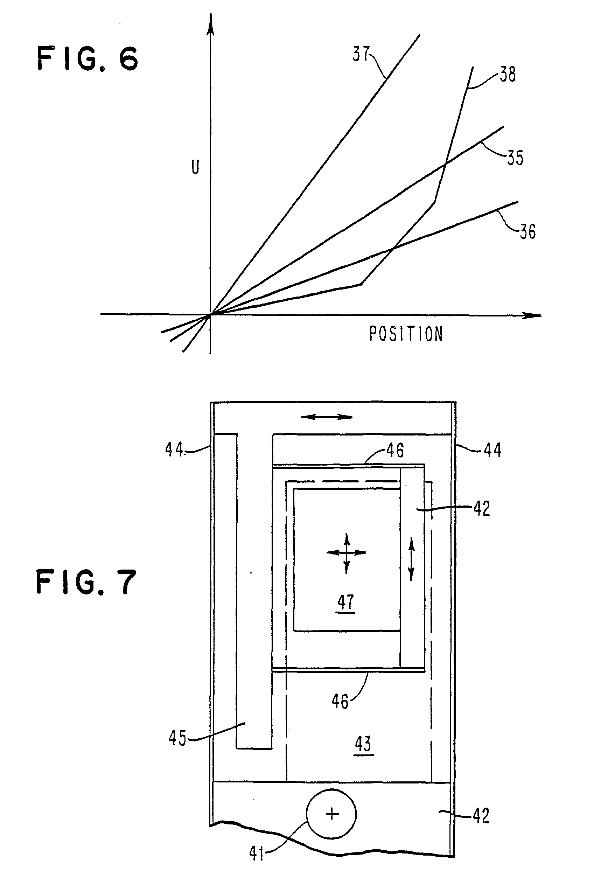

Fig. 6 illustrates graphically the effect of programming for different compliance values, in the form of force/travel slopes using position as the base variable. Line 35 shows nominal compliance provided by the flexure springs. Lower compliance values result in a lower force to position ratio as shown by line 36; higher compliance values result in a higher force to position ratio, as shown by line 37. Complex compliance algorithms, sometimes required to protect mechanisms as limits of travel are approached, may be programmed according to complex algorithms, such as that resulting in force to travel ratios which change dramatically as threshold positions are reached, as shown by line 38.

—as a variable forcing device

In some applications, it is desirable to exert known forces on a workpiece, as in pull-testing of electrical connector pins. In many cases, negligible motion occurs during the action of the force. The device is capable of exerting programmed forces, since the force exerted on the armature by the pole pieces is proportional to the current flowing through the coils, and the spring flexure force is linearly related to displacement from equilibrium.

—as a measuring device

By virtue of its built-in position sensor, the device can be used as a passive measuring device, in a mode where the coil drive currents are disabled. Applications such as parts profiling can be accomplished by sensing the relationship between a mechanical probe or stylus attached to the moveable armature and the fixed part of the device. In this mode, attached to an external coarse positioner, the size and shape of parts can be determined.

—in combination modes and applications

Since the device incorporates digital control, operation can be switched between the various modes described above as may be necessary to perform a given task. Applications include circuit board and chip probing, linear stepping motor interpolators, scanning microscopy and general laboratory investigations.

Alternative embodiments

For a different order of precision, a quad cell may be used instead of the lateral effect cell. The quad cell has checkerboard plates instead of electrodes; a beacon light beam centered at the intersection of four plates provides a null at a home position. The quad cell is very precise for a single position; the lateral effect cell is accurate over a large range of positions. Electromechanical or electromagnetic devices or other position sensors may be used where appropriate.

Fig. 7 shows a box alternative to the basket configuration of Fig. 1. It eliminates Z motion but at a slight cost of added bulk due to cantilever platforms. Post 41 and base 42 hold stator 43 suspended below flexure springs 44. Cantilever platform 45 is suspended for free motion along its short axis as shown by the arrows. Cantilever platform 45 in turn carries flexure springs 46 which support armature 47, also in cantilever mode, providing armature 47 with free motion in both X and Y dimensions. Armature 47 is thus suspended over stator 43, without static friction and without Z-dimension changes related to repositioning. Other friction-free suspensions such as planar air bearings might be substituted for the load-bearing aspects of the flexure springs, so long as the armature and stator are juxtaposed for operation, position sensing apparatus is in place, and a computer servo loop is active.

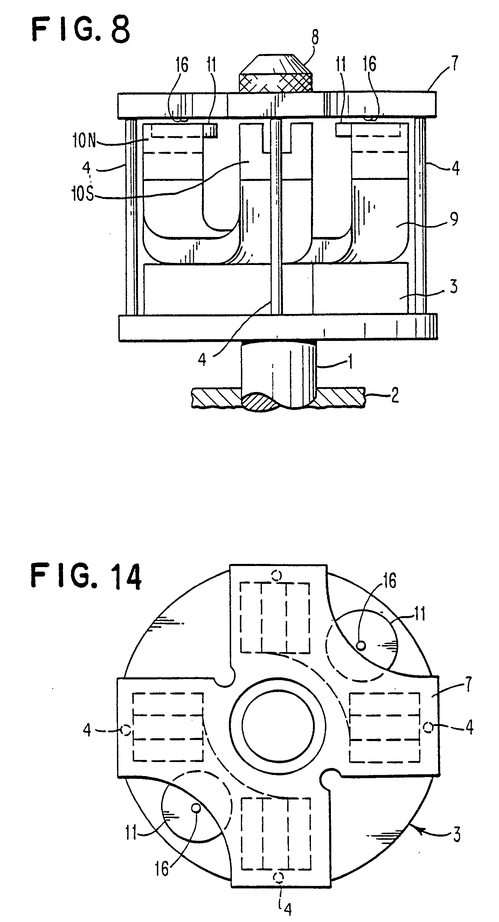

Fig. 8 shows a precision X—Y—Theta positioner in abbreviated detail for ease of description. Support post 1 and bracket 2 may be mounted on a movable gross positioning device or may be solidly mounted to a table. Solidly mounted at the top of support post 1 is stator 3, which defines a reference plane from which motions may be defined. The precision X—Y—Theta positioner may be inverted from the attitude illustrated in Fig. 8, or used in other attitudes with gravity compensation.

Stator 3 includes electromagnets 9 and may be considered as stator means. The stator means includes suitable electrical connections and mechanical support structures and is well known in the art. The stator means carries position sensor 11 and is located inside four flexure columns (4) which support armature 7 in its own plane parallel to the reference plane. Armature 7 may carry a chuck or other fixture 8, which fixture is suspended, protected against any significant Z-motion normal to the base plane, but allowing friction-free X—Y—Theta motion to positions determined by currents in coils (not shown) on magnet 9 pole pieces 10 of the stator means. The armature, of magnetically soft material, is configured for weight minimization, and flux maximization, with several teeth arranged for flux coupling to the electromagnets in the stator means, as is known in the art, and may be considered as armature means. The instantaneous position of the armature means is sensed and signalled by position sensors 11. The position sensors may be lateral effect cells, quad cells or other position sensors exhibiting proper qualities of precision, cost and mass, and may be considered as position sensing means.

The colonnade structure, which serves as armature support means, is balanced so as to provide a friction-free suspension to the armature in operative juxtaposition to the stator. The flexure columns may be of piano wire material or other material capable of flexing in X—Y—Theta dimensions while maintaining longitudinal stability.

Figs. 2 and 3, which illustrate one of the two positioner motors of Fig. 1, also apply to the embodiment of Fig. 8. The motors are positioned so as to share a common stator and a common armature. Each motor is made up of armature 7 and stator 3. Permanent magnet 9, with its pole pieces 10S and 10N, operates with armature 7 to provide motive force in both the X and Y dimensions at the same time. Theta torque is derived from imbalances in X drives, or from imbalances in Y drives, from the two motors.

Stator 3, made up of two permanent magnets 9 with pole pieces 10S and 10N and associated windings 30S and 30N, provides flux differentials at teeth (7-1, 7-2, 7-3, 7-4 and 7-5 shown) of armature 7, providing motive power in both the X and Y dimensions at the same time. Pole pieces 10S and 10N are set orthogonal to each other, and at 45 degree angles to the axis of their permanent magnet 9. Armature 7 is positioned appropriately for the positioning of pole pieces 10S and 10N so that vector X—Y motions may be impressed on armature 7 with respect to the fixed platform base and magnet 9.

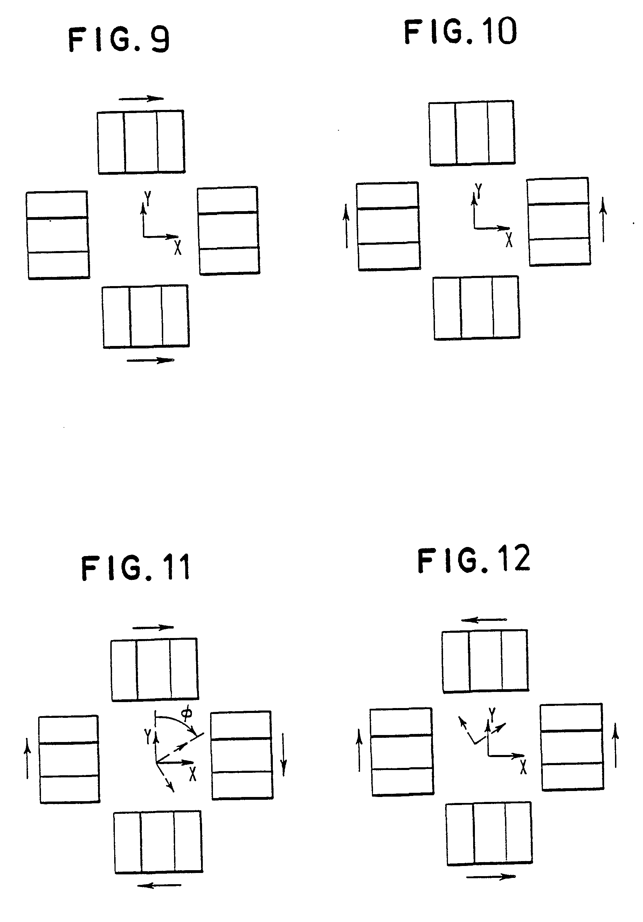

Figs. 9—12 diagram various types of motions within the repertoire of the precision X—Y—Theta positioner. There are at least two electromagnets so as to provide magnetomotive forces balanced or imbalanced selectively for pure translational (X—Y) motions, for rotational (Theta) motions, or for composite vector translational-rotational (X—Y—Theta) motions.

Fig. 9 shows a representative pure translation (plus x) motion. Fig. 10 shows a representative pure translation (plus y) motion. Fig. 11 shows a representative pure rotation (plus Theta) motion. Fig. 12 shows a representative composite vector translation-rotation (minus x, plus y, minus Theta) motion.

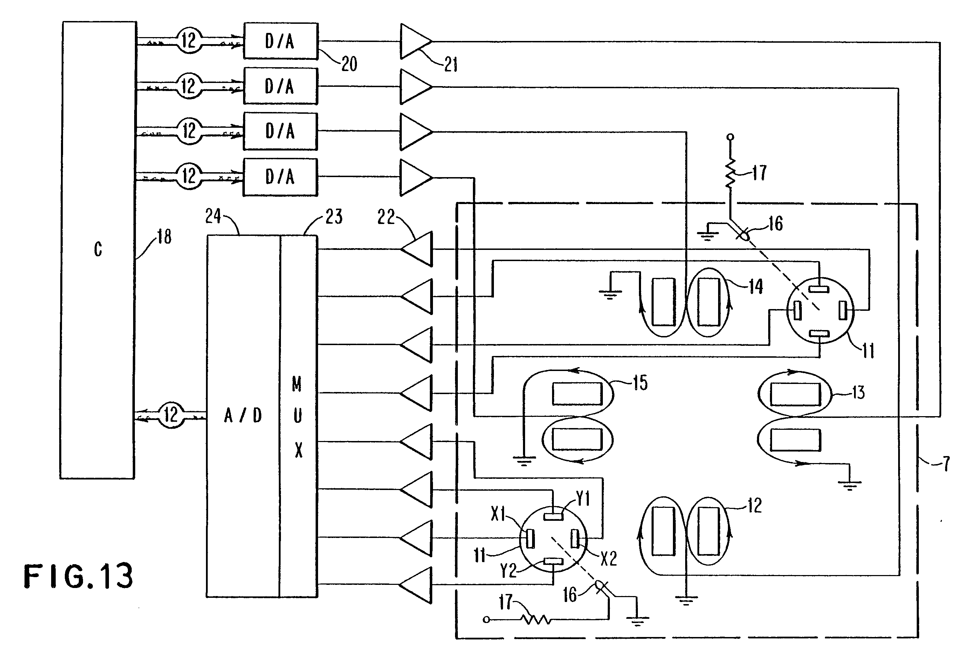

Fig. 13 diagrams the electronic relationships of the armature, the magnet pole pieces, the computer and the position sensor. Position sensors 11 serve as the position sensors for the armature, providing unbalanced voltage signals related to the instantaneous position of the armature with respect to related reference beacon lamps mounted on the stator at corresponding reference points. The computer accepts these position signals, calculates position error statements required to move from instantaneous position to desired position, and sends motion control currents back to motor magnet coils 12, 13, 14 and 15 (which are wound on pole pieces 10) as required to cause movement of armature 7 to the desired position and orientation. Reference point beacon lamps 16, provided with current via circuitry 17, provide positioning information with respect to the reference points of position sensors 11. The position sensors 11 in the preferred embodiment are a pair of lateral effect cells, located in the stator along diameter d at distances d/2 from the center of the stator, directly opposite their related beacon lamps. As the light (which may be infrared) moves between the electrodes of the cells, the cells provide unbalanced location voltage signals to the computer 18, via circuitry including representative amplifier 22, multiplexer 23 and analog-to-digital converter 24. Computer 18, which has been provided with the coordinates of the desired new location, calculates the position and angle error, and provides a position and angle error statement to motor control means made up of digital-to-analog converters, including representative D/A converter 20 and circuitry including representative amplifier 21, which provides motion control currents. This completes the servo loop. Motion of the armature is accordingly provided, and a new instantaneous position and orientation is signalled by position sensors 11. This new instantaneous position and orientation signal is carried back to the computer for dynamic updating of the position and angle error statement. Relatively simple programming changes to computer 18 can be made to provide not only desired motions to armature 7, but also to control the compliance (flexure column resistance to repositioning of the armature 7). The flexure columns provide a nominal compliance; by programming in a ratio change to the digital values provided to the analog-to-digital converter, the nominal compliance may be altered from minimum resistance to repositioning to maximum resistance to repositioning. Compliance may also be programmed to vary as a function of position (for example, higher near the limit of travel) or as a complex variable or logarithmic function.

Description of how the motor works (second embodiment)

In the second embodiment the armature is free to move slightly deforming the flexure columns; the small restoring force related to energy stored during previous flexing of the flexure columns is predictable and can generally be compensated for or ignored. Thus a motion is generated whose value is proportional to the algebraic value of current flowing in the coils. The same relationship holds for pole piece 10S and coils 30S, except the armature motion is in and out of the plane of the paper in the view shows. The teeth on the north and south pole pieces are arranged orthogonal to each other, so motions due to coils 30S and 30N are independent. The provision of plural motors allows for generator of torques to produce rotational (Theta) motions about an axis mutually perpendicular to the X and Y axes.

Lateral effect cells

In this embodiment, two lateral-effect cells are used as position sensors to determine position and orientation of the armature. Each of the two lateral effect cells is located at some radial distance d/2 on a diameter at opposite sides of the stator.

Let x, y denote the local coordinate system on one cell, x', y' denote the local coordinate system of the second cell a distance d away. The x, y and x', y' frames are unrotated with respect to each other; i.e., x is parallel to x' and similarly y is parallel to y'.

Let X, Y denote a coordinate system unrotated with respect to x, y and x', y' and lying midway (d/2) between the two cells. Required is the position and orientation of an imaginary mark in the center of the armature (home position coincident with X=0, Y=0, Theta=0).

From geometrical considerations,

$$X = (x + x')/2,$$

$$Y = (y + y')/2,$$

$$\text{Theta} = 2\,\text{Arcsin}\left[\frac{\sqrt{(x-x')^2 + (y-y')^2}}{2d}\right]$$

Four modes of operation of the precision X—Y—Theta positioner:

—as a fine positioning device

The fine positioning device may be used to execute fine X—Y—Theta motions, which motions are sub-micron in X and Y precision and sub-degree in Theta precision, from a total range of the order of 2 millimeters and several degrees. Motion is rapid and controlled by the feedback loop involving the built-in lateral effect cell position sensors, but could be provided by separate, external sensors which sense the work environment directly. The ability to execute fine motions has many applications in science and engineering.

—as a variable compliance device

The precision X—Y—Theta positioner, when operating in a "regulator mode", attempts to maintain its commanded position. Any external forces tending to displace the device will be met by restoring forces generated by the servo controller. By varying the closed loop gain parameter (in the preferred embodiment this is done simply by changing coefficients in the computer control program) the compliance or stiffness of the device is varied. The natural compliance of the device in open-loop mode is determined by the spring constants of the flexure columns. In closed-loop mode, the compliance is programmed, and may range from much greater than to much less than the natural compliance, as well as equal to the natural compliance simulating open-loop mode. This property is extremely useful for tasks involving the fitting together of two or more mating parts, as in a robot assembly operation.

—as a variable forcing device

In some applications, it is desirable to exert known forces on a workpiece, as in pull-testing of electrical connector pins. In many cases, negligible motion occurs during the action of the force. The precision X—Y—Theta positioner is capable of exerting programmed translational forces and torques, since the force exerted on the armature by the pole pieces is proportional to the current flowing through the coils, and the forces on the flexure columns of the colonnade are linearly related to displacement from equilibrium.

—as a measuring device

By virtue of its built-in position sensors, the precision X—Y—Theta positioner can be used as a passive measuring device, in a mode where the coil drive currents are disabled. Applications such as parts profiling can be accomplished by sensing the relationship between a mechanical probe or stylus attached to the moveable armature and the fixed part of the device. In this mode, attached to an external coarse positioner, the size and shape of parts can be determined.

—cominations modes and applications

Since the precision X—Y—Theta positioner incorporates digital control, operation can be switched between the various modes described above as may be necessary to perform a given task. Typical tasks for the precision X—Y—Theta positioner are semiconductor mask alignment, chip probing and chip placement; tape and disk head assembly; interpolators for stepping motors; scanning microscopy; and laboratory investigations.

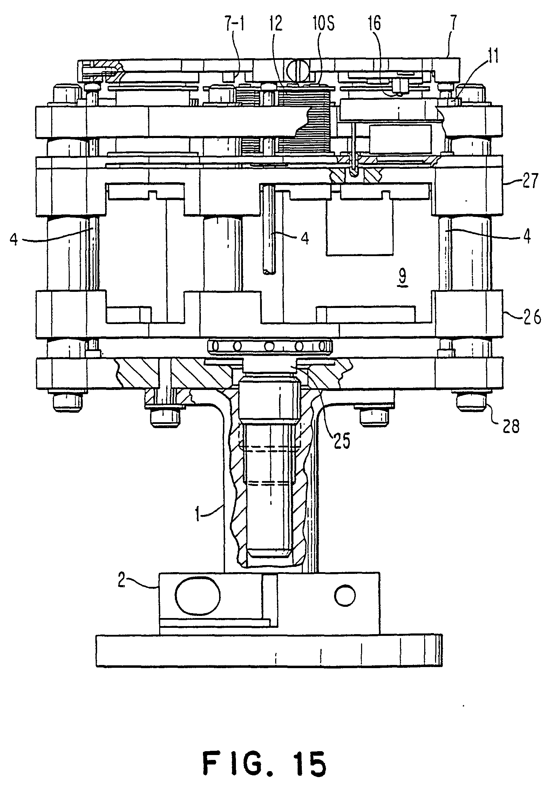

Fig. 15 illustrates details of the preferred embodiment of the precision X—Y—Theta positioner. Fig. 15 shows a colonnade of flexure columns 4 which support armature 7. The armature is configured for light weight and to present itself to the motor magnets. Armature 7 carries reference point beacon lamps 16. Support post 1 and bracket 2 form a substantial base upon which the X—Y—Theta positioner is assembled. Stator 3 is made up of electromagnets and suitable supporting structure. Flexure columns 4 support armature 7 in operable juxtaposition with stator 3. Stator 3 includes electromagnets 9, with associated coils e.g. 12 wound about pole pieces 10. Position sensors 11 operate with associated beacon lamps 16. Flexure columns 4 support armature 7 and provide for armature motion in its own plane by flexing in X—Y—Theta directions.

Motor magnet pole pieces (10S shown) provide magnetic flux to teeth (7-1 shown) on armature 7 to provide power for positioning. Lateral effect cells 11 operate with beacon lamps 16 at reference points on the stator and armature and provide position signals from which position error statements are derived by the computer.

Adjustment may be required to provide appropriate clearance between armature and stator. Adjustment mechanism 25, made up of leadscrew and capstan nut, provides for manual adjustment, by capstan bar in the capstan nut, so as to locate the stator with proper clearance to the armature. Adjustment mechanism 25 operates by raising or lowering stator support platforms 26, 27 which are in fixed relationship to one another in their function of supporting the electromagnets of the stator, and which slide on support rods 28. Support rods 28 do not flex as do flexure columns 4.

These and other alternatives will be apparent to those skilled in the positioner art, without departing from the scope of the invention as pointed out in the following claims.

**Claims**

1. Positioning apparatus comprising
stator means (3, 9, 12, 13, 14, 15), including at least one substantially prismatic, permanent magnet (9), each magnet having first and second coil-equipped pole pieces (10N, 10S) mounted orthogonally to each other at acute angles to the axis of the magnet, totally 90 degrees,
armature means (7, 7-1 to 7-5), said armature means and said stator means together acting as motor means; whereby the forces created between the armature and the two different poles of the same magnet are orthogonal,

armature support means (4, 6) establishing said armature in space with freedom on motion in X and Y dimensions,

armature position sensing means (16, 11), mounted on said armature means and said stator means, for sensing the position of said armature;

control computer means (18);

feedback means (22, 23, 24) connecting said armature position sensing means to said control computer means;

motor control servo means (19, 20, 21) connecting said control computer means and said motor means (12 to 15) operatively so as to provide repositioning power to said armature.

2. Apparatus as claimed in claim 1 in which said armature support means is a basket of two sets (4, 6) of flexure springs suspending said armature from said stator via an intervening spring carrier (5).

3. Apparatus as claimed in claim 1 in which said armature support means is a box supporting said armature (47) cantilevered above said stator (43) by two sets (44, 46) of flexure springs via an intervening cantilever spring carrier (45).

4. Apparatus as claimed in claim 1 in which said armature support means establishes said armature in space with freedom of motion in X, Y and Theta direction by means of a colonnade shaped basket support.

5. Apparatus as claimed in claim 4 in which said colonnade shaped basket support comprises a plurality of parallel columnar springs (4—Figure 8).

6. Apparatus as claimed in any preceding claim including variable compliance means, for controlling the compliance of said armature means relative to the stator means as a function of a compliance function variation formula.

**Patentansprüche**

1. Positioniervorrichtung, bestehend aus:

Ständermitteln (3, 9, 12, 13, 14, 15) mit zumindest einem, im wesentlichen prismatischen Permanentmagneten (9), wobei jeder dieser Magnete erste und zweite, mit Wicklungen ausgerüstete Polelemente (10N, 10S) aufweist, die orthogonal zueinander und im spitzen Winkel zur Magnetachse bei einem Gesamtwinkel von 90 Grad eingebaut sind;

Ankermitteln (7, 7-1 bis 7—5), wobei diese Ankermittel und die genannten Ständermittel zusammen als Motor fungieren, und die zwischen dem Anker und den zwei verschiedenen Polen desselben Magneten erzeugten Kräfte orthogonal zueinander wirken;

Ankerträgermitteln (4, 6), die den genannten Anker räumlich mit Freiheitsgraden in den X- und Y-Achsen anordnen;

Sensormitteln (16, 11) zur Feststellung der Ankerposition, zu diesem Zweck auf den genannten Anker- und Ständermitteln eingebaut,

Steuerrechnermittel (18);

Rückkopplungsmitteln (22, 23, 24), die die genannten Sensormitteln zur Feststellung der Ankerposition mit den genannten Steuerrechnermitteln verbinden;

Motorsteuerservomitteln (19, 20, 21), die die genannten Steuerrechnermittel und die genannten Motormittel (12 bis 15) funktionsmässig miteinander verbinden, um derart den genannten Anker mit Energie zum Neupositionieren zu versorgen.

2. Vorrichtung nach Anspruch 1, bei der das genannte Ankerträgermittel ein Korb ist, der aus zwei Sätzen (4, 6) flexibler Federn besteht, mit deren Hilfe der genannte Anker über einen federnd wirkenden Träger (5) im Vergleich zum Ständer getrennt aufgehängt ist.

3. Vorrichtung nach Anspruch 1, bei der das genannte Ankerträgermittel ein Gehäuse ist, das den genannten, im Verhältnis zum Ständer (43) über zwei Sätze (44, 46) flexibler Federn und mittels eines federnd wirkenden Trägers (45) einseitig vorgespannten Anker (47) hält.

4. Vorrichtung nach Anspruch 1, bei der das gennante Ankerträgermittel den genannten Anker mittels eines kolonnadenförmigen Korbträgers hält und ihm dabei räumlich Freiheitsgrade in den X, Y und Theta-Achsen bietet.

5. Vorrichtung nach Anspruch 4, bei der der genannte kolonnadenförmig ausgebildete Korbträger eine Vielzahl von säulenförmigen Federn (4—Fig. 8) aufweist.

6. Vorrichtung nach allen vorstehend angeführten Ansprüchen, die variable Passungsmittel umfasst, um die Übereinstimmung der genannten Ankermittel im Verhältnis zu den genannten Ständermitteln gemäss einer Formel zur Variation der Übereinstimmungsfunktion zu steuern.

**Revendications**

1. Appareil de positionnement comprenant

un dispositif de stator (3, 9, 12, 13, 14, 15), qui comporte au moins un aimant permanent sensiblement prismatique (9), chaque aimant ayant une première et une deuxième pièces polaires (10N, 10S) pourvues d'un enroulement et montées perpendiculairement l'une à l'autre et suivant des angles aigus par rapport à l'axe de l'aimant, soit au total 90 degrés,

un dispositif d'armature (7, 7-1 à 7-5), ledit dispositif d'armature et ledit dispositif de stator agissant ensemble comme un moteur, de sorte que les forces engendrées entre l'armature et les deux pôles différents du même aimant sont orthogonales,

un support d'armature (4, 6) établissant ladite armature dans l'espace avec une liberté de mouvement dans les dimensions X et Y,

des moyens de détection de position d'armature (16, 11), montés sur ledit dispositif d'armature et ledit dispositif de stator, pour détecter la position de ladite armature;

un ordinateur de commande (18);

des moyens de réaction (22, 23, 24) reliant lesdits moyens de détection de position d'armature audit ordinateur de commande; et

une servo-commande de moteur (19, 20, 21) reliant ledit ordinateur de commande et ledit moteur (12 à 15) fonctionnellement de façon à fournir l'énergie de repositionnement à ladite armature.

2. Appareil suivant la revendication 1, dans lequel ledit support d'armature est un panier constitué de deux groupes (4, 6) de ressorts de flexion suspendant ladite armature audit stator au moyen d'une monture intermédiaire de ressorts (5).

3. Appareil suivant la revendication 1, dans lequel ledit support d'armature est une boîte supportant ladite armature (47) en porte-à-faux au-dessus dudit stator (43) par deux groupes (44, 46) de ressorts de flexion, au moyen d'une monture de ressorts intermédiaire en porte à faux (45).

4. Appareil suivant la revendication 1, dans lequel ledit support d'armature établit ladite armature dans l'espace avec une liberté de mouvement dans la direction X, Y et θ, au moyen d'un panier support en forme de colonnade.

5. Appareil suivant la revendication 4, dans lequel ledit panier support en forme de colonnade comprend une pluralité de colonnettes à ressort parallèles (4—Figure 8).

6. Appareil suivant l'une quelconque des revendications précédentes comprenant des moyens de souplesse variable, pour régler la souplesse dudit dispositif d'armature par rapport au dispositif de stator conformément à une formule de variation de la fonction de souplesse.

# FIG. 1

# F I G. 2

# F I G. 3

FIG. 4

# FIG. 5

FIG. 6

FIG. 7

# F I G. 8

# F I G. 14

# FIG. 9

# FIG. 10

# FIG. 11

# FIG. 12

FIG.13

FIG. 15